# EUROPÄISCHE PATENTSCHRIFT

(11) **EP 0 570 406 B1**
(45) Veröffentlichungstag und Bekanntmachung des Hinweises auf die Patenterteilung: **24.01.1996**
(21) Anmeldenummer: 92903603.6
(22) Anmeldetag: 05.02.1992
(51) Int. Cl.: F16K 31/06, F16K 39/02

(54) **PATRONENVENTIL**
CARTRIDGE VALVE
SOUPAPE A CARTOUCHE

(30) Priorität: 06.02.1991 AT 255/91; 04.03.1991 AT 454/91
(43) Veröffentlichungstag der Anmeldung: 24.11.1993
(73) Patentinhaber: Weber, Günter, A-2474 Gattendorf (AT)
(72) Erfinder: Weber, Günter, A-2474 Gattendorf (AT)
(74) Vertreter: Holzer, Walter, Dipl.-Ing.
(86) Internationale Anmeldenummer: AT9200012
(87) Internationale Veröffentlichungsnummer: WO9214085

(56) Entgegenhaltungen:
- AU-B- 45 141
- FR-A- 2 564 567
- GB-A- 26 334
- US-A- 4 921 208

## Beschreibung

Die Erfindung betrifft ein bekanntes druckkompensiertes Patronenventil mit einem Ventilgehäuse, in dem eine Ventilspindel axial geführt ist, welche an ihrem einen Ende einen Ventilkegel aufweist, dessen Dichtfläche in der Schließstellung an einer an der Gehäuseinnenseite ausgebildeten Ringkante anliegt, wobei ein zwischen Ventilspindel und Gehäuse vorgesehener Ringraum zur einen Seite der Ringkante über eine Anschlußbohrung einen Druckanschluß des Ventiles darstellt und der Mündungsraum der die Ventilspindel aufnehmenden Gehäusebohrung zur anderen Seite der Ringkante einen weiteren Druckanschluß des Ventiles darstellt, und wobei eine Druckausgleichsbohrung den Mündungsraum mit einem Gegendruckraum im Ventilgehäuse verbindet, der das dem Ventilkegel abgekehrte Ventilspindelende umgibt.

Bei Patronenventilen (Cartridge-Ventilen) nach einem nicht vorveröffentlichten älteren Vorschlag wird die Druckkompensation dadurch erreicht, daß die Druckausgleichsbohrung in der Ventilspindel axial verläuft und auf diese Weise den Druckraum auf der einen Seite der Ventilspindel mit dem Gegendruckraum auf der anderen Seite der Ventilspindel verbindet, wodurch sich die Kraftwirkung des Betriebsdruckes auf die Ventilspindel kompensiert und zur Ventilspindelbetätigung lediglich die Kraft zur Verschiebung der Ventilspindel erforderlich ist. Solche druckkompensierten Patronenventile können nicht mit einer Rückschlagfunktion ausgestattet werden, weil der Rückschlagweg im Inneren der Ventilspindel verlaufen müßte und dort bereits die Druckausgleichsbohrung liegt.

Die US-A-4 921 208 zeigt ein Ventil mit einer in der Ventilspindel verlaufenden Druckausgleichsbohrung und mit einem innerhalb des Gehäuses und im Abstand zur Gehäuseinnenseite liegenden Ventilsitz.

Die Erfindung setzt sich daher zum Ziel, ein Patronenventil der einleitend angegebenen Art zu schaffen, das sowohl eine Druckkompensation als auch in einer Richtung eine Rückschlagfunktion aufweist. Dieses Ziel wird erfindungsgemäß dadurch erreicht, daß die Druckausgleichsbohrung im Ventilgehäuse verläuft und daß in der Ventilspindel ein den Ringraum mit dem Mündungsraum verbindender Kanal ausgebildet ist, dessen Öffnung zum Mündungsraum durch eine federbelastete Dichtkugel oder einen federbelasteten Dichtkegel verschlossen ist.

Auf diese Weise wird ein Patronenventil geschaffen, das einfach und kompakt aufgebaut und dabei druckkompensiert ist und einen Rückschlagweg aufweist. Die Erfindung läßt sich sowohl bei 2/2-Wege-Ventilen als auch bei 2/3-Wege-Ventilen einsetzen und ermöglicht in einer Richtung einen freien Durchfluß, sobald die Vorspannkraft der Feder durch den Betriebsdruck überwunden ist, während gleichzeitig die normale 2/2-Wege- bzw. 2/3-Wege-Funktion erhalten bleibt.

In bevorzugter Weise wird die Rückschlagventilfunktion erzielt, indem am Ventilspindelkopf vor der Kanalöffnung eine perforierte Kappe vorzugsweise einstückig angesetzt ist, die die Vorspannfeder aufnimmt, welche die Dichtkugel bzw. den Dichtkegel gegen die Kanalöffnung drückt. Auf diese Weise läßt sich das erfindungsgemäße Patronenventil ohne großen Umrüstaufwand für die Herstellungswerkzeuge fertigen.

Alternativ kann die Vorspannfeder im Kanal angeordnet sein und die Dichtkugel bzw. den Dichtkegel gegen eine an der Kanalinnenseite vor der Kanalöffnung vorspringende Ringkante drücken. Durch diese Gestaltung wird die Durchflußrichtung des Rückschlagweges umgekehrt, wenn diese Ventilfunktion erforderlich ist.

Eine besonders einfache Gestaltung des erfindungsgemäßen Ventiles ergibt sich, wenn die Ventilaufnahme, in welche das Ventil eingesetzt ist, in die Ventilkonstruktion einbezogen wird, indem die Vorspannfeder in der Ventilaufnahme zwischen dem Boden und dem Ventilspindelkopf angeordnet ist und die Dichtkugel bzw. den Dichtkegel gegen die Kanalöffnung drückt.

Eine bevorzugte Weiterbildung des Erfindungsgegenstandes besteht darin, daß der Gegendruckraum über eine Anschlußbohrung einen dritten Druckanschluß des Ventiles bildet. Durch diese Maßnahme wird die Anzahl der möglichen Verwendungsarten des Ventiles erhöht und sein Anwendungsgebiet erweitert. Das Ventil ist insbesondere zur Verwendung als sogenanntes Rohrbruchventil für Zylinder von hydraulischen Ladebordwänden vorbereitet: Das Ventil vereint die Funktionen eines druckkompensierten 2/2-Wege-Ventiles und eines Rückschlagventiles, bei guter Zugänglichkeit aller Druckanschlüsse. Wird dieses Ventil z.B. in den Boden eines Fluidzylinders eigebaut, können weitere Fluidschaltungselemente, gesonderte Anschlußbohrungen und Verbindungsbohrungen im Zylinderboden entfallen.

Bei einer bevorzugten Ausgestaltung dieser Ausführungsform verläuft die Anschlußbohrung des Gegendruckraumes durch die Seitenwand des Ventilgehäuses, das in diesem Bereich von einer Muffe unter Bildung eines Ringraumes abdichtend umschlossen ist, welcher in einen mit der Muffe verbundenen Teil einer Druckanschlußkupplung mündet. Auf diese Weise wird eine konstruktiv einfache und dichte Ankupplung einer Druckleitung an den Gegendruckraum erzielt.

Eine spezielle Druckfluidschaltung mit einem derartigen Patronenventil zeichnet sich erfindungsgemäß dadurch aus, daß das Patronenventil in eine durch eine Sackbohrung in einem Druckfluidschaltungskörper gebildete Ventilaufnahme eingesetzt ist, die den Mündungsraum umschließt und damit die Druckausgleichsbohrung mit dem Kanal in der Ventilspindel verbindet, wobei der erste Druckanschluß die Ventilausgangsseite und der dritte Druckanschluß die Ventileingangsseite bildet. Dadurch kann die Anzahl der erforderlichen Bohrungen im Druckfluidschaltungskörper auf zwei reduziert werden, nämlich auf die Bohrung zur Aufnahme des Ventiles und auf die Anschlußbohrung zum Zylinderraum.

Im folgenden wird die Erfindung an Hand von in den Zeichnungen dargestellten Ausführungsbeispielen näher erläutert. In den Zeichnungen zeigen:
Fig. 1 einen Längsschnitt durch eine erste Ausführungsform der Erfindung;
Fig. 2 einen Ausschnitt aus einem Längsschnitt durch eine zweite Ausführungsform der Erfindung:
Fig. 3 zur Hälfte eine Außenansicht und zur Hälfte einen Längsschnitt einer dritten Ausführungsform der Erfindung, die in eine ausschnittsweise dargestellte Ventilaufnahme eingesetzt ist; und
Fig. 4 zur Hälfte eine Außenansicht und zur Hälfte einen Längsschnitt einer in eine ausschnittweise dargestellte Ventilaufnahme eingesetzten, mit dieser eine erfindungsgemäße Druckfluidschaltung bildenden weiteren Ausführungsform des erfindungsgemäßen Patronenventiles.

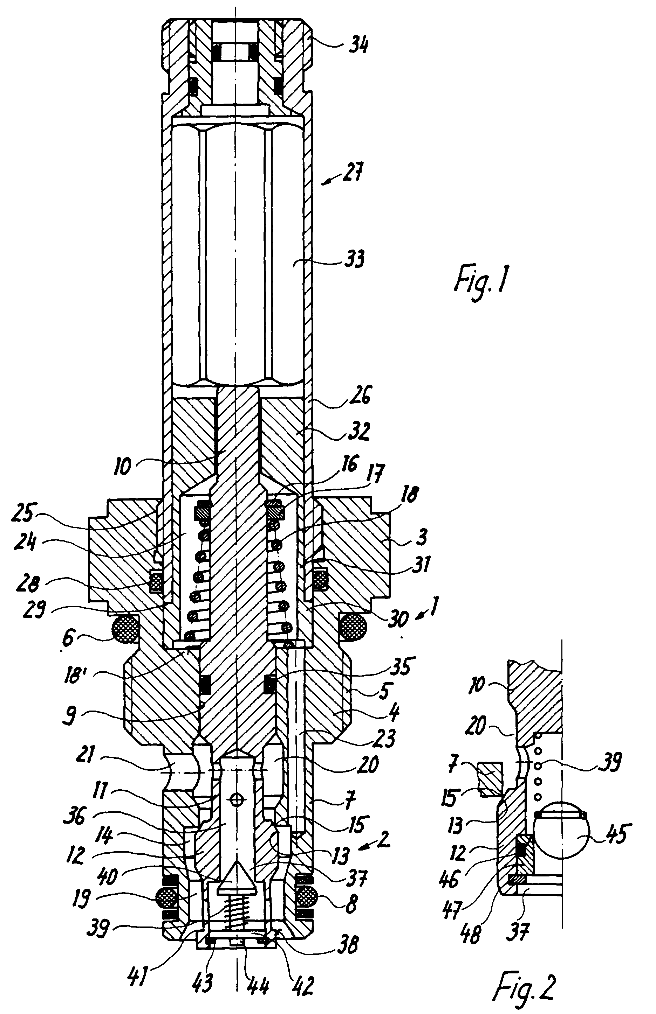

Das in Fig. 1 gezeigte Ventil weist ein Ventilgehäuse 1, 2 auf, dessen Oberteil 1 mit dem Unterteil 2 einstückig ausgeführt ist. Der Oberteil 1 weist an seinem oberen Ende einen Endflansch 3 und an seinem unteren Ende einen Einschraubabschnitt 4 mit einem Außengewinde 5 mit standardisierten Außenabmessungen auf, so daß der obere Teil 1 mitsamt dem angesetzten Unterteil 2 in eine standardisierte (in Fig. 1 nicht dargestellte) Ventilaufnahme einschraubbar ist. Ein O-Ring 6 gewährleistet einen dichten Sitz des Endflansches 3 in der Ventilaufnahme. Ventile mit diesem Gehäuseaufbau werden auch Einschraub-Patronenventile (Cartridge-Ventile) genannt.

Der Gehäuseunterteil 2 hat geringeren Außendurchmesser als der Gehäuseoberteil 1 und bildet daher im eingeschraubten Zustand einen unteren Ventilabschnitt 7 verringerten Außendurchmessers, an dessen unterem Ende ein in einer Umfangsnut verlaufender O-Ring 8 angeordnet ist. Dieser O-Ring 8 dient zu umfangsseitigen Abdichtung des unteren Abschnittes 7 in einem Bohrungsabschnitt verringerten Durchmessers der Ventilaufnahme.

Die Gehäuseteile 1, 2 sind von einer zentralen, mehrfach abgesetzten Bohrung 9 durchsetzt, in der eine Ventilspindel 10 axial verschiebbar geführt ist. Die Spindel 10 hat an ihrem unteren Ende einen Abschnitt 11 verringerten Durchmessers, der in einen Spindelkopf 12 mit erweitertem Durchmesser mündet. Die an den Abschnitt 11 grenzende obere Kante des Spindelkopfes 12 ist abgeschrägt, so daß sie eine kegelstumpfförmige Fläche 13 bildet, die dem Spindelkopf 12 die Funktion eines Ventilkegels verleiht. Dieser Spindelkopf bzw. Ventilkegel 12 bewegt sich in einem Abschnitt 14 erweiterten Innendurchmessers des Gehäuseunterteiles 2 und liegt in der Schließstellung des Ventiles mit der als Dichtfläche dienenden kegelstumpfförmigen Fläche 13 an einer Ringkante 15 an. Die Ringkante 15 wird durch den Übergang vom erweiterten Bohrungsabschnitt 14, in dem sich der Ventilkegel 12 bewegt, zum axialen Bohrungsabschnitt gebildet, in dem sich die Ventilspindel 10 bewegt.

Die Ventilspindel 10 weist in ihrem oberen Abschnitt einen durch einen Klemmring 16 festgelegten Flansch 17 auf, der eine Rückholfeder 18 festlegt, deren anderes Ende an einem Absatz 18' an der Innenseite des Einschraubabschnittes 4 abgestützt ist. Auf diese Weise wird die Ventilspindel 10 in Richtung nach oben vorgespannt, so daß die Dichtfläche 13 des Ventilkegels 12 gegen die Ringkante 15 des Gehäuseunterteiles 2 gepreßt wird. Der ringförmige Ventilspalt zwischen Dichtfläche 13 und Ringkante 15 ist daher in der gezeigten Ruhestellung geschlossen.

Der Mündungsraum 19 unterhalb des Ventilkegels 12 stellt den einen Druckanschluß des Ventiles dar, und der Ringraum 20, der oberhalb des Ventilspaltes im Bereich des Spindelabschnittes 11 verringerten Durchmessers gebildet wird, ist mit einer radialen Bohrung 21 versehen, welche einen weiteren Druckanschluß des Ventiles darstellt. Der im Ringraum 20 herrschende Druck wirkt gleichzeitig auf die obere und die untere Flankenfläche des Spindelabschnittes 11 und wird dadurch in seiner Wirkung auf die Spindel 10 kompensiert.

Der Mündungsraum 19 steht erfindungsgemäß über eine im Ventilgehäuse 1, 2 verlaufende Druckausgleichsbohrung 23 mit einem Gegendruckraum 24 in Verbindung. Dieser Gegendruckraum 24 wird durch einen Bohrungsabschnitt vergrößerten Durchmessers im Gehäuseoberteil 1 gebildet und nimmt das obere Ende der Ventilspindel 10 samt der Vorspanneinrichtung 16 - 18 auf. Auf diese Weise wird der an dem einen Ventilanschluß, dem Mündungsraum 19, herrschende Druck auf beide Seiten der Ventilspindel geleitet und kompensiert.

Durch die Druckkompensation der Anschlüsse 19 und 21 wirkt bei Druckbeaufschlagung des Ventiles in jeder Durchströmungsrichtung keine axiale Kraft auf die Spindel. Die Ventilverschlußkraft wird daher nur durch die Federkraft der Vorspannfeder 18 aufgebracht.

Die Gehäusebohrung 9 besitzt im Bereich des Endflansches 3 ein Innengewinde 25 zur Aufnahme eines endseitig mit einem Außengewinde versehenen, aus nicht magnetischem Stahl bestehenden, im wesentlichen rohrförmigen Gehäuses 26 einer auf die Ventilspindel 10 axial einwirkenden Betätigungseinrichtung 27. Im Anschluß an das Innengewinde 25 ist in der Gehäusebohrung 9 eine Ringnut eingearbeitet, in der ein Dichtungsring 28 liegt.

Die in den Endflansch 3 eingeschraubte Stirnseite 29 des Gehäuses 26 wird von einem Endflansch 30 einer in das Gehäuse 26 eingeschobenen Hülse 31 hintergriffen. Die Hülse 31 ist an ihrem anderen Ende zu einer Gleitführung 32 für das verjüngte obere Ende der Spindel 10 verengt, welches an einem Kern 33 zur Anlage kommt, der im Gehäuse 26 verschiebbar geführt ist. Der Kern 33 ist aus magnetisierbarem Material, z.B. Weicheisen, gefertigt. Auf das Gehäuse 26 ist eine (nicht dargestellte) Magnetspule aufgeschoben, die durch eine (ebenfalls nicht dargestellte) Gewindemutter fixiert wird, die auf das mit einem Außengewinde 34 versehene obere Ende des Gehäuses 26 geschraubt wird. Bei elektrischer Speisung der Magnetspule werden der Kern 33 und damit die Ventilspindel 10 nach unten gedrückt.

Zur Abdichtung des Ventilausgangsanschlusses 21 gegenüber den Druckräumen 19, 24 ist eine Gleitringdichtung 35 vorgesehen, welche die Spindel 10 abdichtend umschließt.

Erfindungsgemäß wird durch die folgende Anordnung eine Rückschlagfunktion vorgesehen: In der Ventilspindel 12 ist ein Kanal 36 ausgebildet, der den Mündungsraum 19 mit dem Ringraum 20 verbindet. Der Kanal 36 wird durch eine axiale Sackbohrung, die von der Stirnseite des Spindelkopfes 12 ausgeht, und eine radiale Bohrung, die von der Spindelwand im Bereich des Abschnittes 11 ausgeht, gebildet.

An der Stirnseite des Spindekopfes 12 ist vor der Öffnung 37 des Kanales 36 eine perforierte Kappe 38 einstückig angesetzt. In der Kappe 38 ist eine Vorspannfeder 39 angeordnet, die einen Dichtkegel 40 von unten gegen die Kanalöffnung 37 drückt. Bei der gezeigten Ausführungsform wird die Kappe 38 durch ein seitlich gelochtes Rohrstück 41 gebildet, das durch eine zentral gelochte Scheibe 42 abgeschlossen ist, welche durch einen Spannring 43 gehalten wird, der in einer Ringnut an der Innenseite des Rohrstückes 41 einrastet. Im Mittelloch der Scheibe 42 ist ein Stift 44 geführt, auf welchen die Feder 39 aufgezogen ist und welcher den Dichtkegel 40 trägt.

Dieser Aufbau ergibt die Funktion eines druckkompensierten 2/2-Wege-Ventiles mit Rückschlagfunktion.

Bei der Ausführungsform der Spindel 12 nach Fig. 2 ist die Rückschlagfunktion entgegengesetzt zu der nach Fig. 1 gerichtet. Die Vorspannfeder 39 ist hier im Inneren des Kanales 36 angeordnet und drückt eine Dichtkugel 45 gegen eine an der Kanalinnenseite vor der Kanalöffnung 37 vorspringende Ringkante 46. Die Ringkante 46 wird durch die Innenkante eines in die Kanalöffnung 37 eingesetzten Reifens 47 gebildet, der durch einen Sprengring 48 gehalten wird, welcher in einer innenseitigen Ringnut in der Kanalöffnung 37 einrastet.

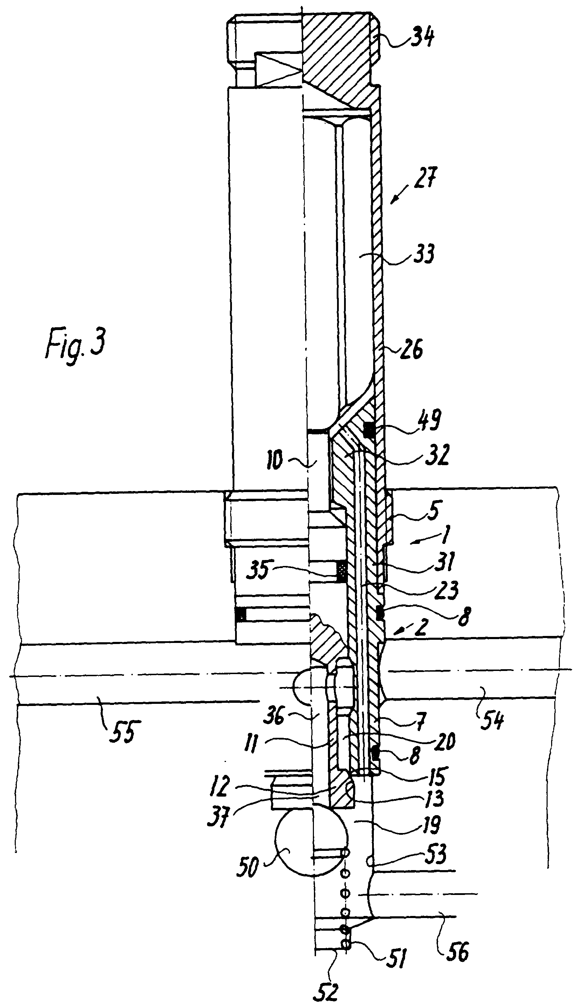

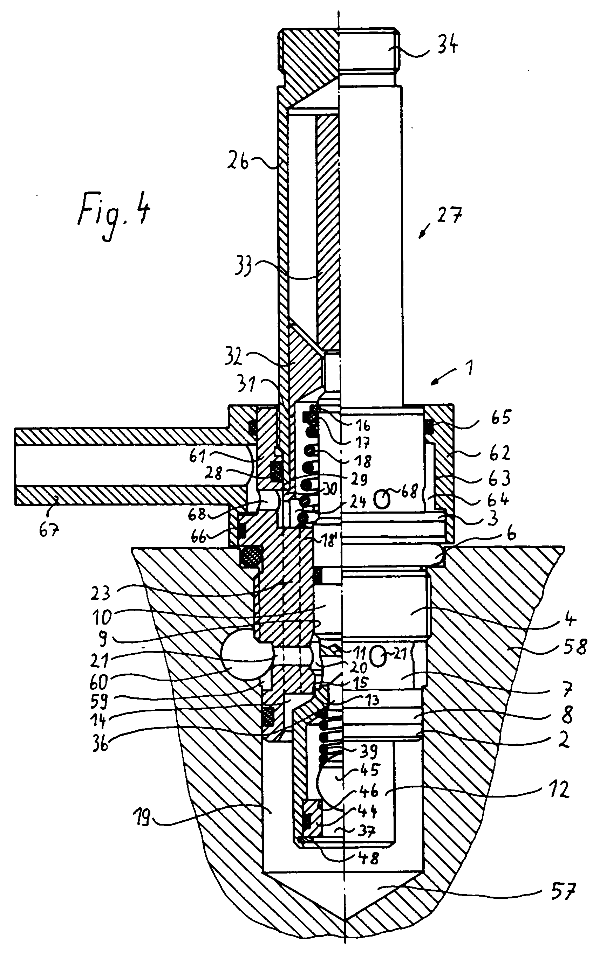

Fig. 3 zeigt eine weitere Ausführungsform der Erfindung mit vereinfachtem Aufbau bei gleicher Funktion. Das Gehäuse 26 ist einstückig mit dem Oberteil 1 ausgebildet, der keinen abgesetzten Endflansch, sondern nur mehr ein Außengewinde 5 aufweist. Der Unterteil 2 des Ventilgehäuses ist vom Oberteil 1 getrennt und in diesen eingesetzt, wobei ein Dichtring 49 zur gegenseitigen Abdichtung vorgesehen ist. Der Unterteil 2 ist seinerseits einstückig mit der Hülse 31 und der Gleitführung 32 ausgebildet. Wieder verläuft die Druckausgleichsbohrung 23 im Ventilgehäuse 1, 2, insbesondere im Unterteil 2 mit der angesetzten Hülse 31 und Gleitführung 32, und der Kanal 36 für den Rückschlagweg in der Spindel 10. Die Kanalöffnung 37 zum Mündungsraum 19 wird hier durch eine Dichtkugel 50 verschlossen, die durch eine Vorspanannfeder 51 gegen die Kanalöffnung 37 gedrückt wird. Die Vorspannfeder 51 ist dabei mit ihrem unteren Ende am Boden 52 der angedeuteten Ventilaufnahme 53 abgestützt, in die das Ventil mit seinem Gewinde 5 eingeschraubt ist. Von dieser Ventilaufnahme 53 gehen Druckanschlußbohrungen 54, 55 und 56 ab. Die Bohrung 54, 55 stellt den einen und die Bohrung 56 den anderen Druckanschluß des Ventiles dar.

Fig. 4 zeigt eine Weiterbildung des Ventiles nach Fig. 1 unter Verwendung des Rückschlagweges gemäß Fig. 2 mit der Dichtkugel 45. (Anstelle einer Dichtkugel könnte ebensogut ein Dichtkegel verwendet werden, und es könnte, wenn dies gewünscht ist, die Rückschlagrichtung umgekehrt werden, indem die Anordnung von Vorspannfeder 39, Dichtelement 45 und Ringkante 46 umgekehrt wird.) Das Ventil ist hier in eine standardisierte Ventilaufnahme eingeschraubt, die durch eine mehrfach abgesetzte Sackbohrung 57 in einem ausschnittweise dargestellten Druckfluidschaltungskörper 58 gebildet ist.

Der Ringraum 20, der in der Gehäusebohrung 9 im Bereich des Spindelabschnittes 11 verringerten Durchmessers ausgebildet ist, steht über die das Gehäuse 1, 2 radial durchsetzenden Bohrungen 21 mit einem Ringraum 59 in Verbindung, welcher sich in der Sackbohrung 57 im Bereich des Gehäuseabschnittes 7 verringerten Außendurchmessers ausbildet. In diesen Ringraum 59 mündet eine im Druckfluidschaltungskörper 58 normal zur Sackbohrung 57 verlaufende Bohrung 60 und bildet damit einen ersten Druckanschluß des Ventiles.

Der den Spindelkopf 12 aufnehmende Mündungsraum 19 der Gehäusebohrung 9 stellt einen zweiten Druckanschluß des Ventiles dar und könnte über eine weitere, im Druckfluidschaltungskörper 58 verlaufende (nicht eingezeichnete) Bohrung benützt werden. Bei der dargestellten Schaltung des Patronenventiles ist der Mündungsraum 19 aber vom Sackendbereich der Sackbohrung 57 umschlossen, wodurch die Druckausgleichsbohrung 23 über den Mündungsraum 19 mit dem Kanal 36 verbunden wird. Im Bereich des Gegendruckraumes 24 ist hier aber ein weiterer Druckanschluß vorgesehen, der nun beschrieben wird.

Der obere Endabschnitt 61 und der Endflansch 3 des Gehäuses 1, 2 sind von einer auf dieses aufgeschobenen oder aufgeschraubten Muffe 62 umschlossen, die einen Mittelabschnitt 63 verringerten Innendurchmessers aufweist, wodurch sich um das Gehäuse 1, 2 im Bereich des Gegendruckraumes 24 ein Ringraum 64 ergibt, der mittels Dichtungsringen 65, 66 nach außen abgedichtet ist. In diesen Ringraum 64 mündet ein mit der Muffe 62 einstückiger Teil 67 einer hier nur schematisch angedeuteten Druckanschlußkupplung. Der Ringraum 64 ist seinerseits über die Seitenwand des Ventilgehäuses 1, 2 durchsetzende Anschlußbohrungen 68 mit dem Gegendruckraum 24 verbunden.

Die Funktionsweise des Ventiles in dieser Druckfluidschaltung ist wie folgt. Am Kupplungsteil 67 wird die (nicht dargestellte) Druckleitung einer Fluidpumpe angeschlossen. Der Druck setzt sich über die Druckausgleichsbohrung 23 in den Mündungsraum 19 fort. Solange die Ventilspindel 10 nicht betätigt wird, ist der Ventilspalt bei 13, 15 geschlossen, und solange der Druck die Kraft der Vorspannfeder 39 nicht überwinden kann, ist auch der Ventilspalt bei 45, 46 geschlossen. Wird der Druck ausreichend hoch, öffnet das Rückschlagventil im Kanal 36, d.h. der Ventilspalt bei 45, 46, und das Druckmedium strömt über den Ausgang 60 des Ventiles.

Ein Gegendruck am Ausgang 60 des Ventiles bleibt selbst nach Abschalten der Druckbeaufschlagung bei 67 aufrecht, weil der Weg über das Rückschlagventil im Kanal 36 verschlossen ist. Es ergibt sich dabei der zusätzliche Vorteil, daß in diesem Zustand das Ventil bis auf den Ringraum 20 drucklos ist und den Gegendruck am Ausgang 60 verschleißfrei aufnehmen kann. Erst durch Betätigen der Ventilspindel 10 wird der Gegendruck am Ausgang 60 über den geöffneten Ventilspalt bei 13, 15 wieder abgebaut.

Eine typische Anwendung dieser Druckfluidschaltung ist die Anspeisung eines Hubzylinders einer Ladebordwand. Der Druckfluidschaltungskörper 58 ist in diesem Fall der Zylinderboden und die Ausgangsbohrung 60 eine in den Zylinderraum mündende Bohrung im Zylinderboden. Die Druckbeaufschlagung bei 67 bewirkt ein Ausfahren des Zylinderkolbens, und nach Abschalten der Druckbeaufschlagung bleibt der Kolben in der ausgefahrenen Stellung, bis das Ventil betätigt wird und das Druckfluid über die Bohrung 60 und den Ventilspalt 13, 15 abströmen kann. Um dieselbe Schaltungsfunktion mit herkömmlichen Ventilen zu erfüllen, müßten im Zylinderboden mehrere Anschluß-, Verbindungs- und Ventilaufnahme- bzw. Kupplungsaufnahmebohrungen vorgesehen werden. Mit dem erfindungsgemäßen Ventil sind demgegenüber lediglich eine Sackbohrung 57 und eine Anschlußbohrung 60 erforderlich.

Es versteht sich, daß die Erfindung nicht auf die beschriebenen Ausführungsbeispiele beschränkt ist. Beispielsweise können die Form der Ventilspindel, des Ventilgehäuses, der Ventilsitz/Ventilkegel-Anordnung, der Art der Abdichtung des Kanales, die Form der Druckausgleichsbohrung, die Art der Anbringung der Muffe am Ventilgehäuse, die Art des Druckanschlusses des Gegendruckraumes usw. verändert werden, solange nur die Druckausgleichsbohrung im Ventilgehäuse verläuft und in der Ventilspindel ein Rückschlagweg vorgesehen ist.

## Patentansprüche

1. Druckkompensiertes Patronenventil mit einem Ventilgehäuse (1,2), in dem eine Ventilspindel (10) axial geführt ist, welche an ihrem einen Ende einen Ventilkegel (12) aufweist, dessen Dichtfläche in der Schließstellung an einer an der Gehäuseinnenseite ausgebildeten Ringkante (15) anliegt, wobei ein zwischen Ventilspindel und Gehäuse vorgesehener Ringraum (20) zur einen Seite der Ringkante über eine Anschlußbohrung (21) einen Druckanschluß des Ventiles darstellt und der Mündungsraum (19) der die Ventilspindel aufnehmenden Gehäusebohrung zur anderen Seite der Ringkante einen weiteren Druckanschluß des Ventiles darstellt, und wobei eine Druckausgleichsbohrung den Mündungsraum mit einem Gegendruckraum (24) im Ventilgehäuse verbindet, der das dem Ventilkegel abgekehrte Ventilspindelende umgibt, dadurch gekennzeichnet, daß die Druckausgleichsbohrung (23) im Ventilgehäuse (1, 2) verläuft und daß in der Ventilspindel (10) ein den Ringraum (20) mit dem Mündungsraum (19) verbindender Kanal (36) ausgebildet ist, dessen Öffnung (37) zum Mündungsraum (19) durch eine federbelastete Dichtkugel (45; 50) oder einen federbelasteten Dichtkegel (40) verschlossen ist.

2. Druckkompensiertes Patronenventil nach Anspruch 1, dadurch gekennzeichnet, daß am Ventilspindelkopf (12) vor der Kanalöffnung (37) eine perforierte Kappe (38) vorzugsweise einstückig angesetzt ist, die die Vorspannfeder (39) aufnimmt, welche die Dichtkugel bzw. den Dichtkegel (40) gegen die Kanalöffnung (37) drückt.

3. Druckkompensiertes Patronenventil nach Anspruch 1, dadurch gekennzeichnet, daß die Vorspannfeder (39) im Kanal (36) angeordnet ist und die Dichtkugel (45) bzw. den Dichtkegel gegen eine an der Kanalinnenseite vor der Kanalöffnung (37) vorspringende Ringkante (46) drückt.

4. Druckkompensiertes Patronenventil nach Anspruch 1, das in eine Ventilaufnahme eingesetzt ist, dadurch gekennzeichnet, daß die Vorspannfeder (51) in der Ventilaufnahme (53) zwischen dem Boden (52) und dem Ventilspindelkopf (12) angeordnet ist und die Dichtkugel (50) bzw. den Dichtkegel gegen die Kanalöffnung (37) drückt.

5. Druckkompensiertes Patronenventil nach Anspruch 1, dadurch gekennzeichnet, daß der Gegendruckraum (24) über eine Anschlußbohrung (68) einen dritten Druckanschluß des Ventiles bildet.

6. Druckkompensiertes Patronenventil nach Anspruch 5, dadurch gekennzeichnet, daß die Anschlußbohrung (68) des Gegendruckraumes (24) durch die Seitenwand des Ventilgehäuses (1, 2) verläuft, das in diesem Bereich von einer Muffe (62) unter Bildung eines Ringraumes (64) abdichtend umschlossen ist, welcher in einen mit der Muffe (62) verbundenen Teil (67) einer Druckanschlußkupplung mündet.

7. Druckfluidschaltung mit einem Patronenventil nach Anspruch 5 oder 6, dadurch gekennzeichnet, daß das Patronenventil in eine durch eine Sackbohrung (57) in einem Druckfluidschaltungskörper (58) gebildete Ventilaufnahme eingesetzt ist, die den Mündungsraum (19) umschließt und damit die Druckausgleichsbohrung (23) mit dem Kanal (36) in der Ventilspindel (10) verbindet, und daß der erste Druckanschluß (20, 21, 59, 60) die Ventilausgangsseite und der dritte Druckanschluß (24, 68, 64, 67) die Ventileingangsseite bildet.

## Claims

1. Pressure-compensated cartridge valve with a valve housing (1, 2), in which a valve spindle (10) is guided axially, which at one if its ends has a valve cone, the sealing surface of which rests in the closed position on an annular edge (15) constructed on the inside of the housing, wherein an annular chamber (20) provided between the valve spindle and housing on one side of the annular edge through a junction bore (21) represents one pressure connection of the valve and the outlet chamber (19) of the housing bore receiving the valve spindle on the other side of the annular edge represents a further pressure connection of the valve, and wherein a pressure equalising bore connects the outlet chamber to a back-pressure chamber (24) in the valve housing, which back-pressure chamber surrounds the end of the valve spindle facing away from the valve cone, characterised in that the pressure equalising bore (23) extends in the valve housing (1, 2) and that in the valve spindle (10) a channel (36) is constructed connecting the annular chamber (20) to the outlet chamber (19), the opening (37) of which channel to the outlet chamber (19) is closed by a spring-loaded sealing ball (45; 50) or a spring-loaded sealing cone (40).

2. Pressure-compensated cartridge valve according to claim 1, characterised in that on the valve spindle head (12) in front of the channel opening (37) a perforated cap (38) preferably in one piece is fixed, which receives the bias spring (39) which pushes the sealing ball or the sealing cone (40) against the channel opening (37) .

3. Pressure-compensated cartridge valve according to claim 1, characterised in that the bias spring (39) is arranged in the channel (36) and pushes the sealing ball (45) or the sealing cone against an annular edge (46) projecting on the inside of the channel in front of the channel opening (37).

4. Pressure-compensated cartridge valve according to claim 1 which is inserted in a valve mounting, characterised in that the bias spring (51) is arranged in the valve mounting (53) between the base (52) and the valve spindle head (12) and the sealing ball (50) or the sealing cone is pushed against the channel opening (37).

5. Pressure-compensated cartridge valve according to claim 1, characterised in that the back-pressure chamber (24) through a junction bore (68) forms a third pressure connection of the valve.

6. Pressure-compensated cartridge valve according to claim 5, characterised in that the junction bore (68) of the back-pressure chamber (24) extends through the side wall of the valve housing (1, 2) which in this region is enclosed in sealing manner by a sleeve (62) with formation of an annular chamber (64) which opens out into a part (67) of a pressure connection coupling connected to the sleeve (62).

7. Pressurised fluid circuit with a cartridge valve according to claim 5 or 6, characterised in that the cartridge valve is inserted in a valve mounting which is formed by a closed bore (57) in a pressurised fluid circuit body (58) and which surrounds the outlet chamber (19) and thus connects the pressure equalising bore (23) to the channel (36) in the valve spindle (10), and that the first pressure connection (20, 21, 59, 60) forms the valve outlet side and the third pressure connection (24, 68, 64, 67) forms the valve inlet side.

## Revendications

1. Soupape à cartouche à équilibrage de pression comportant un corps (1, 2) de soupape avec guidée axialement à l'intérieur de celui-ci une tige de soupape (10) qui est pourvue à l'une de ses extrémités d'un cône (12) de soupape dont la surface d'étanchéité en position de fermeture repose sur une arête (15) annulaire aménagée sur la face intérieure du corps, une chambre annulaire (20) prévue entre la tige de soupape et le corps, d'un côté de l'arête annulaire formant une prise de pression avec un orifice de communication (21) et la chambre d'embouchure (19) dans laquelle débouche l'alésage du corps de soupape recevant la tige de soupape formant, de l'autre côté de l'arête annulaire, une autre prise de pression, un orifice d'équilibrage de pression reliant, dans le corps de soupape, la chambre d'embouchure à une chambre de contre-pression (24) qui entoure l'extrémité de la tige de soupape éloignée du cône de soupape, caractérisée par le fait que l'orifice d'équilibrage de pression (23) s'étend à l'intérieur du corps (1, 2), par le fait qu'un canal (36) qui relie la chambre annulaire (20) à la chambre d'embouchure (19) et dont l'orifice (37) côté chambre d'embouchure (19) est fermé par une bille (45; 50) sollicitée par un ressort ou par un cône (40) sollicité par un ressort est aménagé dans la tige de soupape (10).

2. Soupape à cartouche à équilibrage de pression selon la revendication 1, caractérisée par le fait qu'une coiffe (38) perforée est placée sur la tête (12) de la tige de soupape, en amont de l'orifice (37) du canal, de préférence forme un ensemble monobloc avec la tête de la tige de soupape, laquelle coiffe reçoit le ressort (39) de précontrainte qui presse la bille ou le cône (40) sur l'orifice (37) du canal.

3. Soupape à cartouche à équilibrage de pression selon la revendication 1, caractérisée par le fait que le ressort (39) de précontrainte est disposé dans le canal (36) et presse la bille (45) ou le cône contre un rebord annulaire (46) faisant saillie sur la paroi intérieure du canal, en amont de l'orifice (37) du canal.

4. Soupape à cartouche à équilibrage de pression selon la revendication 1 montée dans un logement de soupape, caractérisée par le fait que le ressort (51) de précontrainte est disposé dans le logement de soupape (53), entre le fond (52) et la tête (12) de tige de soupape, et presse la bille (50) ou le cône contre l'orifice du canal (37).

5. Soupape à cartouche à équilibrage de pression selon la revendication 1, caractérisée par le fait que la chambre de contre-pression (24) forme une troisième prise de pression de la soupape avec un orifice de communication (68).

6. Soupape à cartouche à équilibrage de pression selon la revendication 5, caractérisée par le fait que l'orifice de communication (68) de la chambre de contre-pression (24) s'étend à travers la paroi latérale du corps de soupape (1, 2) qui, dans cette région, est entouré de manière étanche par un manchon (62) et forme une chambre annulaire (64) qui débouche dans une partie (67) d'un raccord de pression lié au manchon (62).

7. Distributeur de fluide sous pression comportant une soupape à cartouche selon la revendication 5 ou la revendication 6, caractérisé par le fait que la cartouche de soupape est montée dans un logement de soupape agencé sous la forme d'un trou (57) non débouchant dans un corps (58) du distributeur, lequel logement entoure la chambre d'embouchure (19) et relie ainsi l'orifice d'équilibrage de pression (23) et le canal (36) dans la tige de soupape (10) et par le fait que la première prise de pression (20, 21, 59, 60) constitue le côté sortie de la soupape et la troisième prise de pression (24, 68, 64, 67) le côté entrée de la soupape.
